# EUROPEAN PATENT APPLICATION

(11) **EP 2 222 064 A1**
(43) Date of publication of application: **25.08.2010**
(21) Application number: 09725831.3
(22) Date of filing: 18.03.2009
(51) Int. Cl.: H04M 3/42, H04W 88/00

(54) **METHOD AND SYSTEM FOR PROCESSING EARLY MEDIA SERVICE BETWEEN DIFFERENT DOMAINS**

(30) Priority: 24.03.2008 CN 200810087727; 06.06.2008 CN 200810108370
(71) Applicant: Huawei Technologies Co., Ltd., Longgang District, Shenzhen Guangdong 518129 (CN)
(72) Inventor: ZHANG, Ying, Longgang District 518129 Shenzhen (CN); WANG, Peng, Longgang District 518129 Shenzhen (CN)
(74) Representative: Kreuz, Georg Maria
(86) International application number: PCT/CN2009/070862
(87) International publication number: WO 2009/117925

(57) **Abstract**

A method and an apparatus for processing early media services between different domains are disclosed herein. The method includes: an MGCF obtains information about capabilities of a calling UE in an IMS domain according to a request sent by the calling UE; and the MGCF chooses whether to or not to provide early media services in a CS domain for the calling UE in the IMS domain according to the information about the capabilities of the calling UE and/or a local policy. In the embodiments of the present invention, the early media service is processed according to the capabilities of the calling UE and the local policy, the early media service of the calling UE can be processed more flexibly.

## Description

### FIELD OF THE INVENTION

The present invention relates to communication technologies, and in particular, to a method and an apparatus for processing early media services between different domains.

### BACKGROUND OF THE INVENTION

In a communication system, before the conversation between two parties begins, the media sent by the network to the calling UE or called UE are early media. A user can subscribe to the early media service. For example, when the called party rings, the network sends ordinary beeps as ring back tones to the calling UE. The Color Ring Back Tone (CRBT) service which is currently prevalent in the Public Switched Telephone Network (PSTN) and the Global System for Mobile communication (GSM) is also an early media service. In the 3rd Generation Partnership Project (3GPP) and the Telecommunications and Internet converged Service Protocol for Advanced Networking (TISPAN), the CRBT service is also known as Customized Alerting Tone (CAT).

In the RFC3959, RFC3960, and RFC5009 developed by the Internet Engineering Task Force (IETF), two solutions are given to implement early media services through a Session Initiation Protocol (SIP): gateway mode, and application server mode.

In the gateway mode, a User Agent Server (UAS) negotiates early media with a User Agent Client (UAC) through a Provisional Reliable Acknowledgement (PRACK) mechanism and an update request to implement the early media service. In the gateway mode, the Session Description Protocol (SDP) Offer of the early media is the same as that of an ordinary session. In the application server mode, a new early session of a content disposition type is added to bear the SDP of the early media. In this way, the early media are negotiated between the UAC and the UAS through the content disposition type to implement the early media service. In the application server mode, the SDP of the early media streams is completely independent of the SDP of the ordinary session.

With the development of the telecommunications standards, the 3GPP puts forward a subsystem that supports IP multimedia services, namely, an IP Multimedia Subsystem (IMS) based on SIP. The IMS enables access to and transfer of integrated voice, data and multimedia services through a Packet Switched (PS) domain. The networks such as PSTN and the Integrated Service Digital Network (ISDN) are based on Circuit Switching (CS). The IMS domain is relatively independent of the CS domain, and the CS domain does not support SIP. Therefore, the CS domain network is unable to provide early media services of the CS domain for a user in the IMS domain in the foregoing mode.

In order for the users in the IMS domain to experience the early media services of the CS domain, the standards developed by the TISPAN put forward a solution.

In this solution, the IMS domain network is an Internet Protocol (IP) network, and the CS domain network is a PSTN. Through a Media Gateway Control Function (MGCF), the early media service of the PSTN is provided for the users in the IP network. Moreover, the prerequisite of this solution is that the calling UE of the IMS domain supports a P-Early-Media header field.

In the foregoing solution, the early media service is implemented in the gateway mode by default. Therefore, it is impossible to provide early media services according to actual conditions.

### SUMMARY OF THE INVENTION

The objectives of the present invention are to provide a method and an apparatus for processing early media services between different domains, and process the early media services according to the capabilities of the calling UE in the IMS domain and/or the local policy.

In order to fulfill the foregoing objectives, a method and an apparatus for processing early media services between different domains are provided in an embodiment of the present invention.

The method provided in an embodiment of the present invention includes:
by an MGCF, obtaining information about capabilities of a calling UE in an IMS domain according to a request sent by the calling UE; and
choosing whether to or not to provide early media services in a CS domain for the calling UE in the IMS domain according to the information about the capabilities of the calling UE and/or a local policy.

The apparatus provided in an embodiment of the present invention includes:
a request receiving unit, configured to receive a request sent by a calling UE in an IMS domain;
a capability obtaining unit, configured to obtain and send information about capabilities of the calling UE according to the request; and
a selecting and executing unit, configured to: choose whether to or not to provide early media services in a CS domain for the calling UE in the IMS domain according to the received capability information and/or a local policy.

In the embodiments of the present invention, the early media service is processed according to the information about capabilities of the calling UE and/or the local policy, the early media service of the calling UE can be processed more flexibly.

### BRIEF DESCRIPTION OF THE DRAWINGS

To make the technical solution in the present invention or in the prior art more clearly, the following outlines the accompanying drawings for illustrating the embodiments of the present invention or the prior art. Apparently, the accompanying drawings outlined below are for the exemplary purpose only, and persons of ordinary skill in the art can derive other drawings from such accompanying drawings without creative efforts.
FIG. 1 is a detailed flowchart of a method provided in an embodiment of the present invention;
FIG. 2 is a flowchart of a first method embodiment of the present invention;
FIG. 3 is a flowchart of a second method embodiment of the present invention;
FIG. 4 is a flowchart of a third method embodiment of the present invention;
FIG. 5 is a flowchart of a fourth method embodiment of the present invention;
FIG. 6 shows an apparatus provided in an embodiment of the present invention;
FIG. 7 shows a selecting and executing unit provided in an embodiment of the present invention;
FIG. 8 is a detailed flowchart of a method provided in an embodiment of the present invention; and
FIG. 9 is a flowchart of a fifth method embodiment of the present invention.

### DETAILED DESCRIPTION OF THE EMBODIMENTS

In the prior art, the early media service is implemented in a gateway mode by default, and the prerequisite is that the calling UE in the IMS domain supports the P-Early-Media. When the calling UE in the IMS domain supports only the early session, the calling party is unable to experience the early media service in the CS domain; or, when the calling UE in the IMS domain does not support the P-Early-Media, the calling party may hear the ring back tone generated by the calling UE locally and the mixed ring tone of the early media in the CS domain.

The embodiments of the present invention provide a method and an apparatus for processing early media services between different domains.

The method provided in an embodiment of the present invention includes:
an MGCF obtains information about capabilities of a calling UE in an IMS domain according to a request sent by the calling UE; and
the MGCF chooses whether to or not to provide early media services in a CS domain for the calling UE in the IMS domain according to the information about the capabilities of the calling UE and/or a local policy.

The information about the capabilities of the calling UE and/or the local policy refers to: information about capabilities of the calling UE in the IMS domain, or a local policy, or both of them.

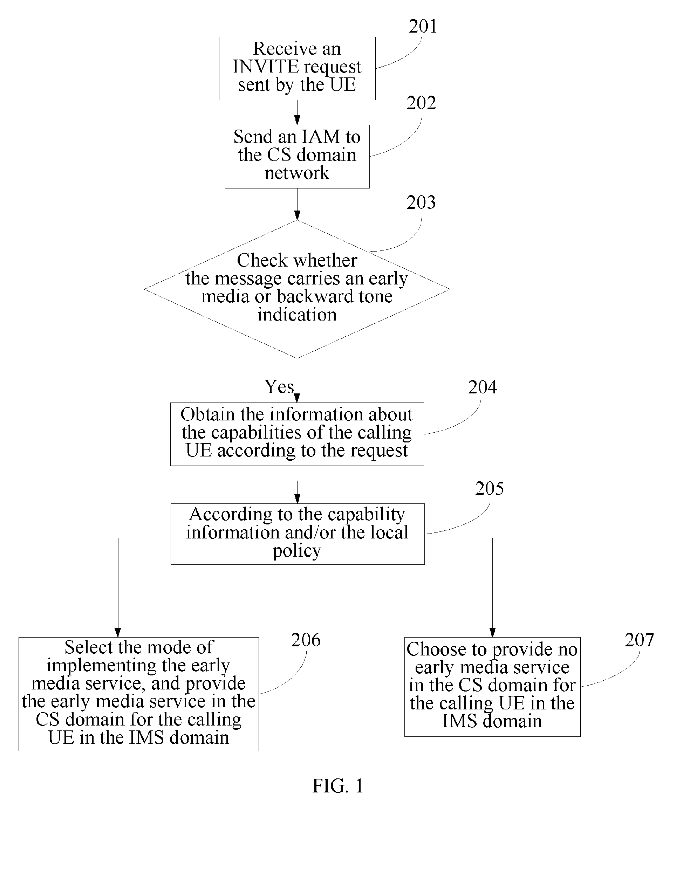

The process of the method provided in an embodiment of the present invention is elaborated below with reference to accompanying drawings. As shown in FIG. 1, the process includes the following steps:
Step 201: The MGCF receives an INVITE request sent by the calling UE. The INVITE request includes an SDP offer request of an ordinary session.
Step 202: The MGCF sends an Initial Address Message (IAM) to a CS domain network. The CS domain network may be a PSTN or Public Land Mobile Network (PLMN).
Step 203: The MGCF receives an Address Complete Message (ACM) or Call Process (CPG) message from the CS domain network, and checks whether the message carries early media or backward tone indication, for example, checks whether the message carries an "in-band tone available" indication or a CAT service indication. If the message carries such an indication, the process proceeds to the next step.
Step 204: The MGCF obtains the information about the capabilities of the calling UE according to the request.
Step 205: Depending on the information about capabilities of the calling UE and/or the local policy, the process proceeds to step 206 or step 207.
Step 206: The MGCF selects the mode of implementing the early media service, and provides the early media service in the CS domain for the calling UE in the IMS domain.
Step 207: The MGCF chooses to provide no early media service in the CS domain for the calling UE in the IMS domain.

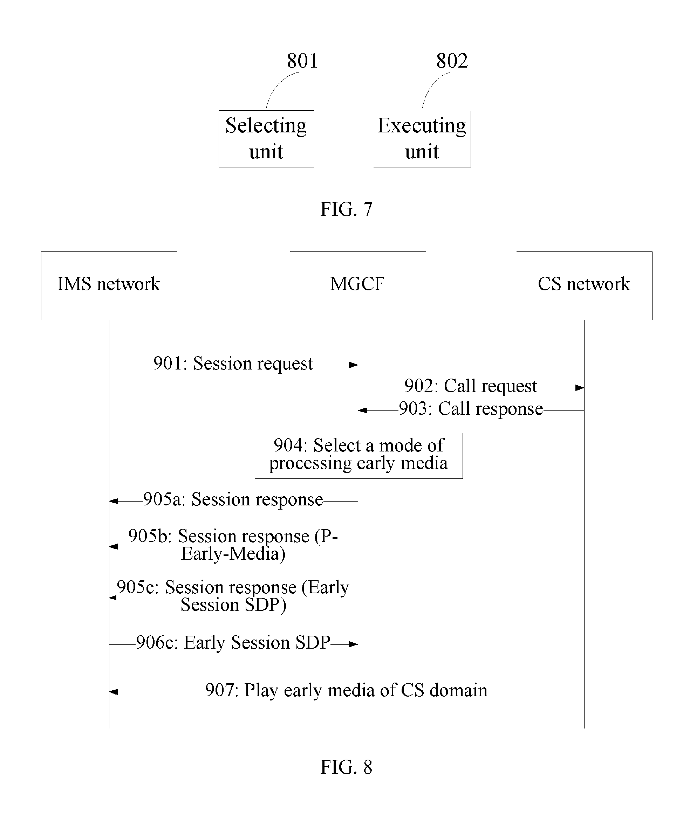

The process of a method provided in an embodiment of the present invention is elaborated below with reference to accompanying drawings. As shown in FIG. 8, the process includes the following steps:
Step 901: The MGCF receives a session request sent by the IMS domain network. The session request may be an INVITE request.
Step 902: The MGCF sends a call request to the CS domain network. The call request may be an IAM, and the CS domain network may be a PSTN or PLMN.
Step 903: The MGCF receives a call response message from the CS domain network, and then checks whether the response message carries an early media or backward tone indication. The call response message may be an ACM or CPG message. The method of checking whether the response message carries an early media or backward tone indication may be: checking whether the ACM or CPG message carries an "in-band tone available" indication or a CAT service indication. If the message carries such an indication, the process proceeds to step 904; otherwise, the process proceeds to step 905a.
Step 904: The MGCF obtains the information about capabilities of the calling UE, and selects a mode of processing early media services according to the capabilities of the calling UE and/or the local policy. The mode of processing early media services may be: providing no early media service in the CS domain for the calling UE in the IMS domain; or using a gateway mode to provide the early media service in the CS domain for the calling UE in the IMS domain; or using an application server mode to provide the early media service in the CS domain for the calling UE in the IMS domain. If the MGCF chooses to provide no early media service in the CS domain for the calling UE in the IMS domain, the process proceeds to step 905a; if the MGCF selects the gateway mode, the process proceeds to step 905b; if the MGCF selects the application server mode, the process proceeds to step 905c.

The MGCF may obtain the information about capabilities of the calling UE in the following methods, but without being limited to the following methods:
a. If the call request in step 901 carries a "P-Early-Media: supported" header field, it is determined that the calling UE supports P-Early-Media header.
b. If the Supported header field in the call request in step 901 carries an Early Session parameter, it is determined that the calling UE supports Early Session Disposition type.

The MGCF may select the mode of processing early media services according to the capabilities of the calling UE and/or the local policy in the following methods, but without being limited to the following methods:
a. If the calling UE supports P-Early-Media header, the MGCF selects the gateway mode.
b. If the calling UE supports Early Session Disposition type, the MGCF selects the application server mode.
c. If the calling UE supports both P-Early-Media and Early Session, the MGCF may select the gateway mode or application server mode according to the local policy.
d. If the calling UE supports neither P-Early-Media nor Early Session, the MGCF may select the gateway mode according to the local policy, or choose to provide no early media service in the CS domain to the calling UE in the IMS domain.
e. If the calling UE does not support Early Session, the MGCF chooses to provide no early media service in the CS domain to the calling UE in the IMS domain according to the local policy.
f. If the calling UE does not support P-Early-Media, the MGCF chooses to provide no early media service in the CS domain to the calling UE in the IMS domain according to the local policy.
g. The MGCF chooses to provide no early media service in the CS domain for the calling UE in the IMS domain according to the local policy.

Step 905a: The MGCF sends a session response message that carries no early media information. The session response message may be a 180 response or a 183 response.

Step 905b: The MGCF sends a session response message that carries an early media indication. The session response message may be a 180 response or a 183 response. The early media indication may be a P-Early-Media header field, and the parameter set in the header field may be "sendrecv" or "sendonly". Afterward, the process proceeds to step 907.

Step 905c: The MGCF sends a session response message that carries the SDP of the Early Session. The response message may be a 180 response or a 183 response. Afterward, the process proceeds to step 906c.

Step 906c: The MGCF receives a session response message that carries an SDP answer of the Early Session from the IMS network. The answer in the session response message may be a PRACK request. Afterward, the process proceeds to step 907.

Step 907: The CS domain of the called UE plays tones to the calling UE through a Media Gateway (MGW) controlled by the MGCF.

The embodiments of the present invention are elaborated below with reference to accompanying drawings.

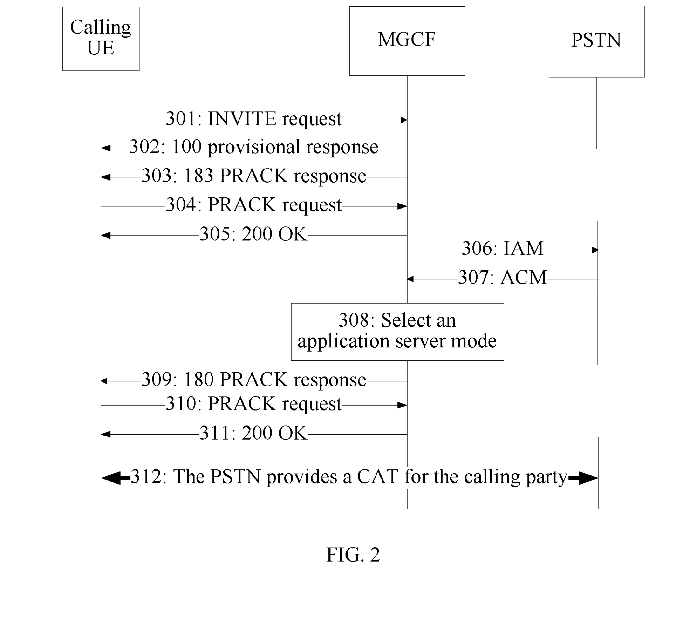

In the first embodiment, the MGCF uses an application server mode to provide a PSTN CAT service for the IMS calling UE. That is, the CS domain network is a PSTN. As shown in FIG. 2, the process of this embodiment includes the following steps:
Step 301: The MGCF receives an INVITE request from the calling UE. A Supported header field in the INVITE request carries an Early Session, and the message body carries an SDP OFFER of an ordinary session.
Step 302: The MGCF returns a 100 provisional response message.
Step 303: The MGCF returns a 183 PRACK message that carries an SDP Answer of an ordinary session.
Step 304: The MGCF receives a PRACK request sent by User Equipment (UE) in response to the 183 PRACK.
Step 305: The MGCF sends a 200 OK in response to the received PRACK request.
Step 306: The MGCF sends an IAM to the PSTN.
Step 307: The MGCF receives an ACM from the PSTN. The ACM carries the information about the CAT service to be provided by the PSTN.
Step 308: According to the parameter of the Supported header field in the INVITE request in step 301, the MGCF determines that the calling UE supports Early Session Disposition type, and chooses to provide the PSTN CAT service for the calling UE in the application server mode.
Step 309: The MGCF sends a 180 PRACK response that carries an SDP Offer of the Early Session. The SDP Offer may be the same as the SDP Answer of the ordinary session in step 303.
Step 310: The MGCF receives a PRACK request that carries an SDP Answer of the Early Session from the calling UE.
Step 311: The MGCF sends a 200 OK in response to the received PRACK request.
Step 312: The PSTN plays a CAT tone to the calling UE.

In the first embodiment above, if the port that receives the SDP Answer of the Early Session in step 310 is 0, the MGCF does not send an H.248 command which instructs the MGW to enable the media access control. In this way, it is ensured that the early media streams in the CS domain are not sent to the calling UE.

In the first embodiment above, even if the calling UE in the IMS domain supports only Early Session, the calling party can still experience the early media service provided by the CS domain. In the case that the calling UE supports Early Session Disposition type, the MGCF can use an application server mode to provide early media services of the PSTN for the calling UE so that the calling party can experience the early media services.

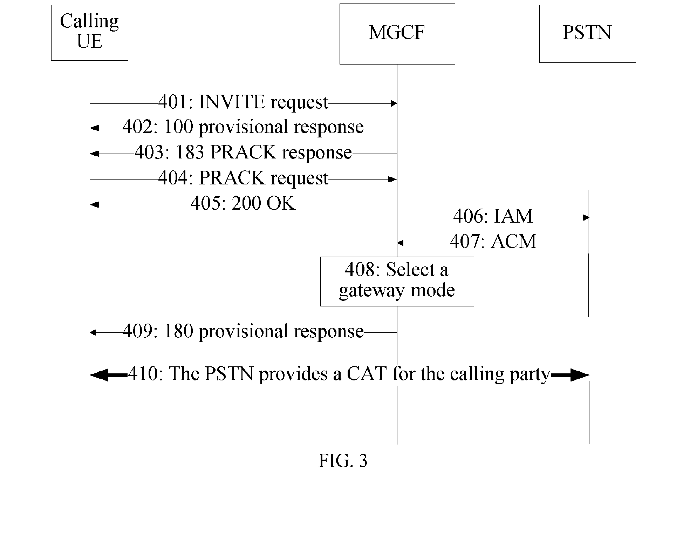

In the second embodiment, the MGCF uses a gateway mode to provide a PSTN CAT service for the IMS calling UE. That is, the CS domain network is a PSTN. As shown in FIG. 3, the process of this embodiment includes the following steps:
Step 401: The MGCF receives an INVITE request from the UE. The INVITE request carries a "P-Early-Media: supported" header field, and the message body of the INVITE request carries an SDP OFFER of an ordinary session.
Steps 402-407 are the same as steps 302-307 in the first embodiment.
Step 408: According to the P-Early-Media header field in the INVITE request in step 401, the MGCF determines that the UE supports P-Early-Media header, and chooses to provide the PSTN CAT tone for the UE in the gateway mode.
Step 409: The MGCF sends a 180 provisional response that carries a "P-Early-Media: sendrecv" header field.
Step 410: The PSTN plays a CAT tone to the UE.

In the second embodiment above, even if the calling UE in the IMS domain supports only P-Early-Media, the calling party can still experience the early media service provided by the CS domain. If the calling UE supports P-Early-Media header, the MGCF can provide early media services of the PSTN for the calling UE in a gateway mode. After determining that the UE supports P-Early-Media header, the MGCF uses a proper mode to provide early media services. Therefore, it is avoided that the early media service is also provided for the calling UE when the calling UE does not support P-Early-Media. The calling party can hear the ring back tone generated by the calling UE locally and the mixed ring tone of the early media service in the CS domain.

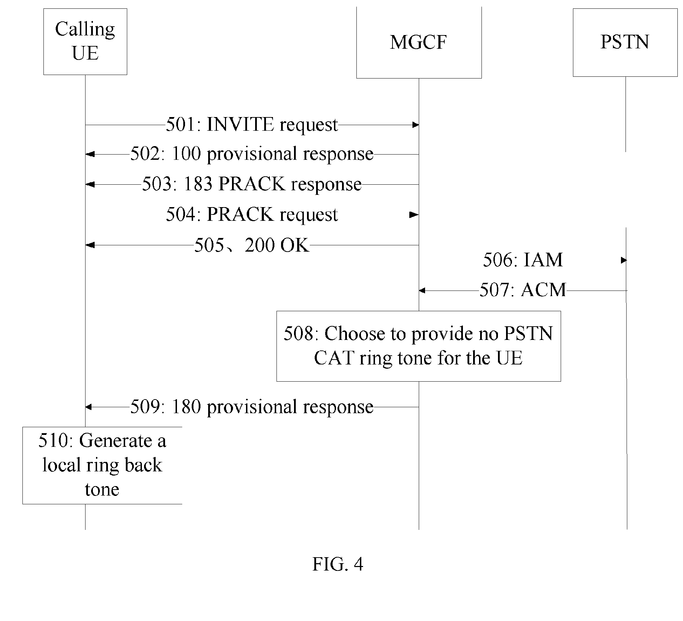

In the third embodiment, the MGCF chooses to provide no PSTN CAT service for the IMS calling UE according to the capabilities of the calling UE. That is, the CS domain network is a PSTN. As shown in FIG. 4, the process of this embodiment includes the following steps:
Step 501: The MGCF receives an INVITE request sent by the UE.
Steps 502-507 are the same as steps 302-307 in the first embodiment.
Step 508: According to the INVITE request in step 501, the MGCF determines that the UE supports neither P-Early-Media nor Early Session, and chooses to provide no PSTN CAT tone for the UE.
Step 509: The MGCF sends a 180 provisional response.
Step 510: The UE generates a local ring back tone.

In the third embodiment above, in the case that the calling UE in the IMS domain supports neither P-Early-Media nor Early Session, it is avoided that the calling party experiences the ring back tone generated locally and the mixed tone of the early media service provided by the CS domain.

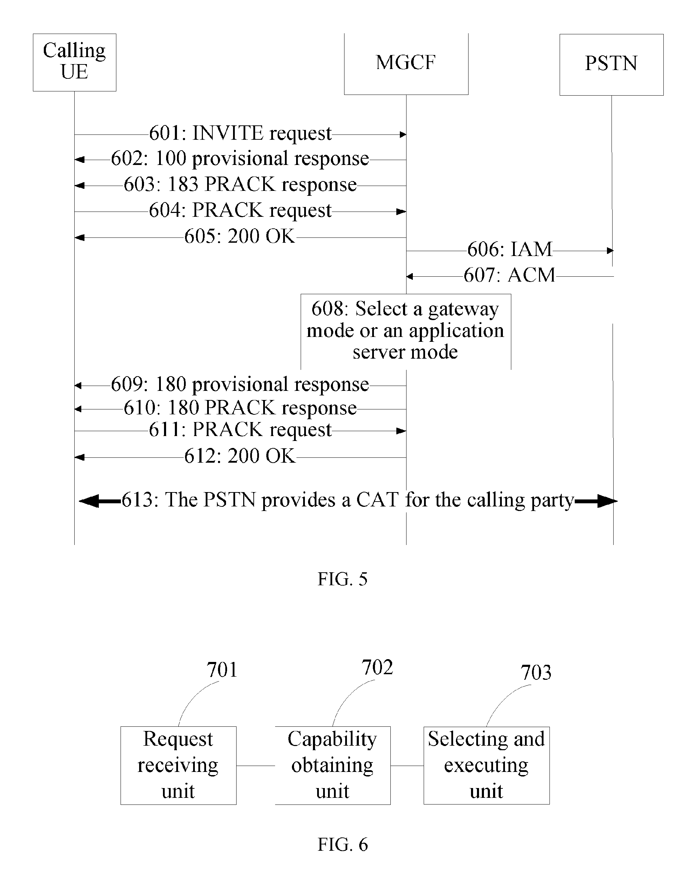

In the fourth embodiment, the MGCF uses a gateway mode to provide a PSTN CAT service for the IMS calling UE according to the capabilities of the calling UE and the local policy. That is, the CS domain network is a PSTN. As shown in FIG. 5, the process of this embodiment includes the following steps:
Step 601: The MGCF receives an INVITE request from the UE. The INVITE request carries a "P-Early-Media: supported" header field, and the message body of the INVITE request carries an SDP OFFER of an ordinary session, and the Supported header field carries an Early Session parameter.
Steps 602-607 are the same as steps 302-307 in the first embodiment.
Step 608: According to the P-Early-Media header field in the INVITE request in step 601 and the Early Session parameter carried in the Supported header field, the MGCF determines that the UE supports both P-Early-Media and Early Session, and selects a gateway mode or application server mode to provide a PSTN CAT tone for the UE according to the local policy. If a gateway mode is selected, the process proceeds to step 609; if an application server mode is selected, the process proceeds to step 610.
Step 609: The MGCF sends a 180 provisional response that carries a "P-Early-Media: sendrecv" header field. The process proceeds to step 613.
Step 610: The MGCF sends a 180 PRACK response that carries an SDP Offer of the Early Session. The SDP Offer may be the same as the SDP Answer of the ordinary session in step 603.
Step 611: The MGCF receives a PRACK request that carries an SDP Answer of the Early Session from the calling UE.
Step 612: The MGCF sends a 200 OK in response to the received PRACK request.
Step 613: The PSTN plays a CAT tone to the UE.

In the fourth embodiment above, in the case that the calling UE in the IMS domain supports both P-Early-Media and Early Session, the calling party can still experience the early media service provided by the CS domain.

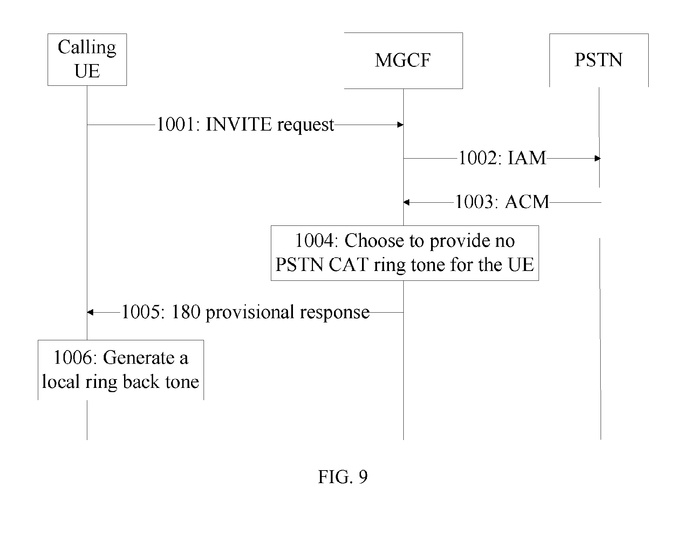

In the fifth embodiment, the MGCF chooses to provide no PSTN CAT service for the IMS calling UE according to the policy of the service provider. That is, the CS domain network is a PSTN. As shown in FIG. 9, the process of this embodiment includes the following steps:
Step 1001: The MGCF receives an INVITE request from the UE. The Supported header field in this request carries an Early Session parameter, and the message body of this request carries an SDP OFFER of an ordinary session.
Step 1002: The MGCF sends an IAM to the PSTN.
Step 1003: The MGCF receives an ACM from the PSTN. The ACM carries the information about the CAT service to be provided by the PSTN.
Step 1004: According to the local policy, the MGCF chooses to provide no PSTN CAT tone for the UE.
Step 1005: The MGCF sends a 180 provisional response.
Step 1006: The UE generates a local ring back tone.

The fifth embodiment above is also applicable to the scenario that the Supported header field in the INVITE carries a P-Early-Media parameter.

In the first embodiment, second embodiment and fourth embodiment, the MGCF may choose to provide no early media service of the CS domain for the calling UE in the IMS domain according to the local policy. The MGCF sends only a provisional response to the calling UE. If the MGCF chooses to provide no early media service of the CS domain for the calling UE in the IMS domain, the MGCF sends no H.248 command which requires the MGW to enable the media access control. In this way, it is ensured that the early media streams of the CS domain are not sent to the calling UE.

In step 301, step 401, step 501, and step 601 in the embodiment above, the entities such as Proxy Call Session Control Function (P-CSCF), Serving Call Session Control Function (S-CSCF), Breakout Gateway Control Function (BGCF) are omitted. The foregoing embodiment description is also applicable to the scenario that the called party of the IMS domain forwards the call to a third party, and the third party is located in a CS domain network.

As shown in FIG. 6, an apparatus provided in an embodiment of the present invention includes:
a request receiving unit 701, configured to receive a request sent by a calling UE in an IMS domain;
a capability obtaining unit 702, configured to obtain and send information about capabilities of the calling UE according to the request; and
a selecting and executing unit 703, configured to: choose whether to or not to provide early media services in a CS domain for the calling UE in the IMS domain according to the received capability information and/or a local policy.

As shown in FIG. 7, the selecting and executing unit includes:
a selecting unit 801, configured to: select a mode of implementing the early media service or choose to provide no early media service for the calling UE in the IMS domain according to the capability information and/or a local policy; and
an executing unit 802, configured to provide an early media service of a CS domain for the calling UE in the IMS domain or provide no early media service for the calling UE in the IMS domain.

In the foregoing apparatus embodiment, the early media service is processed in light of the capabilities of the calling UE and the local policy. Therefore, when the calling UE of the IMS domain supports P-Early-Media header and/or Early Session, the calling party can experience the early media service of the CS domain, without hearing the ring back tone generated by the calling UE locally or the mixed ring tone of the early media in the CS domain.

The apparatus provided in an embodiment of the present invention may be an MGCF as a whole or a functional module inside the MGCF, and may be in the form of hardware, or software, or both hardware and software.

The above descriptions are merely some exemplary embodiments of the present invention, but not intended to limit the spirit and scope of the present invention. Any modification, equivalent replacement, or improvement made without departing from the principle of the present invention should fall within the scope of the present invention.

## Claims

1. A method for processing an early media service between different domains, comprising:
by a Media Gateway Control Function (MGCF), obtaining information about capabilities of a calling User Equipment (UE) in an IP Multimedia Subsystem (IMS) domain according to a request sent by the calling UE; and
deciding whether to provide the early media service of a Circuit Switched (CS) domain for the calling UE according to the information about the capabilities of the calling UE and/or a local policy.

2. The method of claim 1, wherein: the process of deciding whether to provide the early media service of the CS domain for the calling UE according to the information about the capabilities of the calling UE and/or the local policy comprises:
selecting a mode of implementing the early media service according to the information about the capabilities of the calling UE and/or the local policy, and using the selected mode to provide the early media service of the CS domain for the calling UE in the IMS domain.

3. The method of claim 2, wherein:
the mode of implementing the early media service may be an application server mode or a gateway mode.

4. The method of claim 2, wherein:
a gateway mode is selected to provide the early media service of the CS domain for the calling UE when the information about the capabilities of the calling UE indicates that the calling UE supports P-Early-Media header; or
the MGCF selects an application server mode to provide the early media service of the CS domain for the calling UE when the information about the capabilities of the calling UE indicates that the calling UE supports Early Session Disposition type.

5. The method of claim 2, wherein:
the MGCF selects an application server mode or a gateway mode to provide the early media service of the CS domain for the calling UE when the information about the capabilities of the calling UE indicates that the calling UE supports both Early Session and P-Early-Media.

6. The method of claim 1, wherein:
the MGCF chooses to provide no early media service of the CS domain for the calling UE when the information about the capabilities of the calling UE indicates that the calling UE does not support P-Early-Media; or
the MGCF chooses to provide no early media service of the CS domain for the calling UE when the information about the capabilities of the calling UE indicates that the calling UE does not support Early Session.

7. The method of claim 1, wherein:
if the request carries a "P-Early-Media: Supported" header field, namely, a parameter in the header field is set to "Supported", the information about the capabilities of the calling UE indicates that the calling UE supports P-Early-Media header; or
if the "Supported" header field in the request carries an Early Session parameter, the information about the capabilities of the calling UE indicates that the calling UE supports Early Session Disposition type.

8. The method of claim 1, wherein:
if the request carries "P-Early-Media: Supported", and a "Supported" header field carries an Early Session parameter, the information about the capabilities of the calling UE indicates that the calling UE supports both P-Early-Media and Early Session.

9. The method of claim 3, wherein: if the mode is the gateway mode, before providing the early media service of the CS domain for the calling UE in the IMS domain, the method comprises:
by the MGCF, sending a provisional response message that carries a P-Early-Media header field to the calling UE.

10. The method of claim 9, wherein:
a parameter of the header field is set to "sendrecv" or "sendonly".

11. The method of claim 3, wherein: if the mode is the application server mode, the method further comprises:
by the MGCF, sending a provisional response message that carries a Session Description Protocol (SDP) Offer request of Early Session to the calling UE; and
receiving an answer message from the calling UE, wherein the answer message carries an SDP Answer of Early Session.

12. The method of claim 11, wherein:
if the port number contained in the received the Early Session SDP Answer is 0, the MGCF chooses to send no H.248 command which instructs a Media Gateway (MGW) to enable media access control.

13. The method of claim 1, wherein: after choosing to provide no early media service of the CS domain for the calling UE in the IMS domain, the method comprises:
by the MGCF, sending a provisional response to the calling UE of the IMS domain, and choosing to send no H.248 command which instructs a Media Gateway (MGW) to enable media access control.

14. An apparatus for processing an early media service between different domains, comprising:
a request receiving unit, configured to receive a request sent by a calling User Equipment (UE) in an IP Multimedia Subsystem (IMS) domain;
a capability obtaining unit, configured to obtain and send information about capabilities of the calling UE according to the request; and
a selecting and executing unit, configured to: choose whether to or not to provide the early media service in a Circuit Switched (CS) domain for the calling UE in the IMS domain according to the received capability information and/or a local policy.

15. The apparatus of claim 14, wherein the selecting and executing unit comprises:
a selecting unit, configured to: select a mode of implementing the early media service according to the capability information and/or the local policy; and
an executing unit, configured to provide the early media service in the CS domain for the calling UE in the IMS domain according to the selected mode of implementing the early media service.
